# NEUE EUROPÄISCHE PATENTSCHRIFT

(11) **EP 3 458 323 B2**
(45) Veröffentlichungstag und Bekanntmachung des Hinweises auf die Entscheidung über den Einspruch: **10.05.2023**
(45) Hinweis auf die Patenterteilung: 25.03.2020
(21) Anmeldenummer: 17723976.1
(22) Anmeldetag: 11.05.2017
(51) Int. Cl.: B60T 17/22, B60T 8/17, B60T 13/66

(54) **VERFAHREN UND VORRICHTUNG ZUR STEUERUNG ODER REGELUNG EINER BREMSANLAGE**
METHOD AND DEVICE FOR CONTROLLING OR REGULATING A BRAKE SYSTEM
PROCÉDÉ ET DISPOSITIF POUR COMMANDER OU RÉGULER UN DISPOSITIF DE FREINAGE

(30) Priorität: 17.05.2016 DE 102016108998
(43) Veröffentlichungstag der Anmeldung: 27.03.2019
(73) Patentinhaber: KNORR-BREMSE Systeme für Schienenfahrzeuge GmbH, 80809 München (DE)
(72) Erfinder: HERDEN, Marc-Oliver, 81377 München (DE); VOLLMER, Achim, 82024 Taufkirchen (DE); TOMBERGER, Christoph, 80469 München (DE); GRUBER, Miriam, 80992 München (DE)
(74) Vertreter: Prüfer & Partner mbB Patentanwälte · Rechtsanwälte
(86) Internationale Anmeldenummer: PCT/EP2017/061317
(87) Internationale Veröffentlichungsnummer: WO 2017/198535

(56) Entgegenhaltungen:
- WO-A1-2007/096213
- WO-A1-2011/050950
- WO-A1-2015/132232
- WO-A2-2012/126946
- DE-A1- 10 135 797
- DE-A1-102011 052 545
- DE-A1-102012 202 118
- DE-U- 6 608 396

## Beschreibung

Die vorliegende Erfindung betrifft ein Verfahren und eine Vorrichtung zur Steuerung oder Regelung einer Bremsanlage, insbesondere einer Bremsanlage eines Schienenfahrzeugs. Die Erfindung betrifft ferner eine Bremsanlage, insbesondere eine Bremsanlage eines Schienenfahrzeugs, mit einer solchen Steuerungs- oder Regelungsvorrichtung.

Bremsanlagen von Schienenfahrzeugen weisen in der Regel mehrere verschiedene Bremssysteme auf. In nahezu allen Schienenfahrzeugen sind Druckluftbremsen, auch als pneumatische Bremsen (PN) bezeichnet, im Einsatz. Daneben weisen Schienenfahrzeuge, insbesondere Triebfahrzeuge, auch Magnetschienenbremsen (MG) und bei elektrischen und dieselelektrischen Fahrzeugen elektrodynamische Bremsen (ED) bzw. bei dieselhydraulischen Fahrzeugen hydraulische bzw. Retarderbremsen auf. Neuere Fahrzeuge, insbesondere Triebfahrzeuge des Hochgeschwindigkeitsverkehrs, werden auch mit sogenannten Eddy Current Brakes (ECB) ausgerüstet.

Beim Bremsen von Schienenfahrzeugen wird zwischen verschiedenen Arten der Bremsung unterschieden. So wird beispielsweise eine Betriebsbremsung durch den Triebfahrzeugführer oder durch automatische Steuerungen eingeleitet. Die Betriebsbremse ist hinsichtlich Lebenszykluskosten, Komfort und ökologischen Gesichtspunkten (maximale Nutzung der rekuperativen elektrodynamischen Bremse) optimiert. Deswegen werden während einer Betriebsbremsung vorrangig verschleißfreie Bremssysteme, wie die elektrodynamische Bremse, eingesetzt.

Schnellbremsungen werden hingegen durch den Triebfahrzeugführer im Gefahrenfall eingeleitet. Dabei werden verkürzte Ansprechzeiten gefordert. Es werden die Bremsen mit der höchsten Verfügbarkeit eingesetzt. Daher kommen bei der Schnellbremsung, unter der nachfolgend auch eine Notbremsung, Zwangsbremsung oder Gefahrenbremsung verstanden werden soll, auch die Reibungsbremsen, wie beispielsweise die pneumatische Bremse/Druckluftbremse, und die Magnetschienenbremse zum Einsatz.

Die für die Schnellbremsung verwendeten Bremssysteme müssen hohe Anforderungen hinsichtlich der Sicherheitsbewertung erfüllen. Viele Funktionen der Betriebsbremse können deshalb während der Schnellbremse nicht genutzt werden, da sie die entsprechenden Anforderungen hinsichtlich der Sicherheitsbewertung nicht erfüllen. Die Nutzung der Betriebsbremsfunktionen während der Schnellbremse bei gleichzeitiger Sicherstellung der geforderten Sicherheit bringt jedoch erheblich ökonomische und auch ökologische Vorteile. Diese werden insbesondere, aber nicht ausschließlich, bei Hochgeschwindigkeitszügen erzielt, wo die zum Bremsen des Fahrzeugs notwendige Energie und der dabei auftretende Verschleiß hoch ist und somit die ökonomischen und ökologischen Vorteile der Nutzung verschleißfreier Bremsen auch in der Schnellbremsung besonders hoch sind.

In herkömmlichen Bremsanlagen werden die Bremssysteme für eine Schnellbremsung so angesteuert, dass die sicherheitsrelevante Reibungsbremse aktiviert wird und die weiteren Bremssysteme, die nur für niedrigere Sicherheitsanforderungen ausgelegt sind, deaktiviert werden. Dadurch wird ein hohes Sicherheitsniveau garantiert. Das Bremsmoment wird dadurch jedoch ausschließlich durch die einem Verschleiß unterworfene Reibungsbremse erzeugt. Die verschleißarmen Bremssysteme sind hingegen deaktiviert. Dadurch wird einerseits ein hoher Verschleiß erzeugt, und andererseits ist es nicht möglich, die Bremsenergie rückzugewinnen.

Aus der WO 2012 / 126 946 A2 ist ferner ein Aktuator für ein Bremssystem eines Schienenfahrzeugs bekannt. Aus der DE 10 2011 052 545 A1 ist ein Verfahren zur Durchführung einer Schnellbremsung bekannt.

Der Erfindung liegt daher die Aufgabe zugrunde, ein verbessertes Verfahren und eine verbesserte Vorrichtung zur Steuerung oder Regelung einer Bremsanlage bereitzustellen, die einen möglichst verschleißarmen Betrieb der Bremsanlage während einer Schnellbremsung ermöglichen.

Die Aufgabe wird durch ein Verfahren zur Steuerung oder Regelung einer Bremsanlage mit den Verfahrensschritten des Anspruchs 1 sowie durch eine Vorrichtung zur Steuerung oder Regelung einer Bremsanlage mit den Merkmalen des Anspruchs 8 und durch ein Schienenfahrzeug mit den Merkmalen des Anspruchs 14 gelöst. Weitere Merkmale der Erfindung ergeben sich aus den Unteransprüchen.

Ein erfindungsgemäßes Verfahren zur Steuerung oder Regelung einer Bremsanlage, insbesondere einer Bremsanlage eines Schienenfahrzeuges, die wenigstens ein sicherheitsrelevantes Bremssystem und wenigstens ein weiteres Bremssystem aufweist, liest zunächst eine der Bremsanlage vorgegebene Schnellbremsanforderung ein. Aufgrund der Schnellbremsanforderung leitet das Verfahren dann eine Schnellbremsung ein, wobei das weitere Bremssystem verwendet wird. Die Gesamtbremskraft des Schienenfahrzeugs wird überwacht, und es wird überprüft, ob die Gesamtbremskraft einen Schwellwert überschreitet. Überschreitet die Gesamtbremskraft einen Schwellwert, so wird die Schnellbremsung unter ausschließlicher Verwendung des sicherheitsrelevanten Bremssystems weitergeführt.

Das sicherheitsrelevante Bremssystem ist bei Schienenfahrzeugen vorzugsweise ein pneumatisches Bremssystem (PN), d. h. die allgemein vorhandene Druckluftbremse. Es können neben dem sicherheitsrelevanten Bremssystem ein oder mehrere weitere Bremssysteme vorhanden sein. Die weiteren Bremssysteme sind so ausgelegt, dass sie niedrigere Sicherheitsanforderungen erfüllen als das sicherheitsrelevante Bremssystem. Die weiteren Bremssysteme sind beispielsweise eine elektrodynamische Bremse, eine Magnetschienenbremse oder eine Eddy Current Brake (ECB). Für eine Vielzahl von Triebfahrzeugen ist beispielsweise das Vorhandensein einer Magnetschienenbremse vorgeschrieben. Bei Dieselfahrzeugen kann, wenn es sich um ein dieselhydraulisches Fahrzeug handelt, statt einer elektrodynamischen Bremse eine hydraulische Bremse, beispielsweise eine Retarderbremse, eingesetzt werden.

Das erfindungsgemäße Verfahren liest zunächst eine von außen vorgegebene Schnellbremsanforderung ein. Diese kann vom Triebfahrzeugführer ausgelöst werden, aber auch beispielsweise, wie z.B. bei Zwangsbremsungen, durch die Sicherheitsfahrschaltung oder Zugsicherungssysteme, wie Indusi. Aufgrund der von außen vorgegebenen Schnellbremsanforderung leitet das erfindungsgemäße Verfahren unmittelbar eine Schnellbremsung ein. Bei der Schnellbremsung wird das weitere Bremssystem verwendet. Dabei kann das weitere Bremssystem zunächst überwiegend oder ausschließlich eingesetzt werden, oder es wird zusätzlich und unterstützend zum sicherheitsrelevanten Bremssystem eingesetzt. Dabei wird, wenn das sicherheitsrelevante Bremssystem eine pneumatische Bremse ist, eine Druckregelung der pneumatischen Bremse durchgeführt, um die Bremskraft zu verteilen und soweit wie möglich mit dem weiteren Bremssystem, insbesondere mit einem verschleißfreien weiteren Bremssystem, zu bremsen. Da beispielsweise die elektrodynamische Bremse nicht bis zu einem Stillstand des Fahrzeuges herunterbremst und ihr Bremsmoment mit abnehmender Geschwindigkeit sinkt, kann es erforderlich sein, die Bremsmomente der verschiedenen Bremssysteme beispielsweise in Abhängigkeit von Geschwindigkeit und Lasten zu steuern und damit eine geeignete Bremskraftverteilung herbeizuführen, um jederzeit eine optimale Gesamtbremskraft zu erzielen.

Während der Schnellbremsung wird die Gesamtbremskraft des Schienenfahrzeugs überwacht. Dazu werden Informationen über den Fahrzeugzustand, die beispielsweise messtechnisch erfasst werden können, verarbeitet, um aus ihnen Rückschlüsse über die Gesamtbremskraft des Fahrzeugs zu schließen. Es wird dann überprüft, ob die Gesamtbremskraft des Fahrzeuges einen vorgegebenen Schwellwert überschreitet. Dieser Schwellwert kann konstant, er kann aber auch beispielsweise geschwindigkeitsabhängig sein. Es kann sich beim Schwellwert um einen einzigen Schwellwert für das Überschreiten durch die Gesamtbremskraft handeln.

Sind die Schwellwerte voneinander verschieden, so wird ein Bereich zwischen den beiden Schwellwerten gebildet, in dem die Gesamtbremskraft liegen muss, um eine Bremsung unter Verwendung des oder der weiteren Bremssysteme durchzuführen. Liegt die Gesamtbremskraft gemäß einer nicht zur Erfindung gehörenden Lehre hingegen unterhalb des kleineren der beiden Schwellwerte, so ist die Gesamtbremskraft, die unter Verwendung wenigstens eines der weiteren Bremssysteme erzielt wird, zu niedrig, so dass die Schnellbremsung unter ausschließlicher Verwendung des sicherheitsrelevanten Bremssystems fortgeführt wird, um eine ausreichende Bremskraft zu erzielen.

Liegt die Gesamtbremskraft hingegen oberhalb des größeren der beiden Schwellwerte, so ist die Gesamtbremskraft, die unter Verwendung wenigstens eines der weiteren Bremssysteme erzielt wird, zu hoch, so dass die Schnellbremsung ebenfalls unter ausschließlicher Verwendung des sicherheitsrelevanten Bremssystems fortgeführt wird. Dadurch kann verhindert werden, dass eine Kraftschlussausnutzung beispielsweise zwischen Rad und Schiene überschritten wird und es beispielsweise zu einem Gleiten kommen kann.

Der Verwendung zweier voneinander verschiedener Schwellwerte mit einem zwischen den beiden Schwellwerten angeordneten Wertebereich entspricht die Verwendung eines einzelnen Schwellwerts, der jedoch von einem Hysteresebereich umgeben ist überschreitet die Gesamtbremskraft des Fahrzeuges den Schwellwert oder die jeweiligen Schwellwerte, dann wird die Schnellbremsung unter ausschließlicher Verwendung des sicherheitsrelevanten Bremssystems fortgeführt. Dabei wird die Bremsmomentanforderung an das sicherheitsrelevante Bremssystem, in der Regel an die pneumatische Bremse, erhöht. Die weiteren Bremssysteme des Fahrzeuges werden dann deaktiviert und nicht mehr zur Weiterführung der Schnellbremsung eingesetzt. Es wird damit, wenn die Gesamtbremskraft den oder die Schwellwerte überschreitet, auf einen zweiten, unabhängigen Bremsmodus geschaltet, welcher der herkömmlichen Schnellbremse entspricht.

Das erfindungsgemäße Verfahren zur Steuerung oder Regelung einer Bremsanlage ermöglicht die Nutzbarkeit der Betriebsbremsfunktionen bzw. der weiteren Bremssysteme, die während einer Betriebsbremsung eingesetzt werden, auch während der Schnellbremse. Dadurch kann der Verschleiß der Bremssysteme reduziert werden, und eine Rückgewinnung von Bremsenergie wird möglich. Dabei wird gleichzeitig die Sicherheitsintegrität der Schnellbremse sichergestellt, so dass die Sicherheitsanforderungen an das System zur Durchführung der Schnellbremsung erfüllt werden, obwohl einzelne Komponenten, die bei der Schnellbremsung verwendet werden können, die entsprechenden Anforderungen hinsichtlich der Sicherheitsbewertung nicht erfüllen.

In einer weiteren Ausgestaltung des Verfahrens erfolgt das Überwachen der Gesamtbremskraft des Fahrzeuges durch Messen der Gesamtverzögerung in Fahrzeugrichtung. Die Verzögerung des Fahrzeuges ist eine einfach bestimmbare Größe, aus der auf die Gesamtbremskraft zurückgeschlossen werden kann. Dabei wird die Gesamtverzögerung vorzugsweise in Fahrtrichtung durch einen Beschleunigungssensor gemessen. Dies hat den Vorteil, dass das System auch in Steigungen und Gefällen die korrekte Bremskraft überprüfen kann, während Systeme, die sich auf die kinematische Längsverzögerung des Fahrzeuges stützen, um die Gesamtverzögerung des Fahrzeugs in Fahrtrichtung zu bestimmen, zu Abweichungen zur tatsächlichen Bremskraft in Steigungen und Gefällen führen können. Dabei kann einer, oder es können auch mehrere Beschleunigungssensoren im Fahrzeug angeordnet sein.

In einer weiteren vorteilhaften Ausgestaltung des Verfahrens ist das sicherheitsrelevante Bremssystem eine pneumatische Bremse. Pneumatische Bremsen sind in Schienenfahrzeugen in der Regel vorhanden. Sie sind einfach aufgebaut und erfüllen die entsprechenden Anforderungen hinsichtlich der Sicherheitsbewertung. Insbesondere kann mit pneumatischen Bremsen eine Verzögerung des Fahrzeugs bis zum Stillstand erreicht werden.

In einer weiteren vorteilhaften Ausgestaltung des Verfahrens kann bei der Durchführung der Schnellbremsung der Druck der pneumatischen Bremse anhand der Geschwindigkeit, der Last, oder beider Größen gesteuert oder geregelt werden. Diese Drucksteuerung bzw. -regelung ist einerseits dann möglich, wenn die pneumatische Bremse lediglich mit den anderen Bremssystemen zusammenwirkt, um die Schnellbremsung durchzuführen, aber insbesondere auch dann, wenn die Schnellbremsung unter ausschließlicher Verwendung des pneumatischen Bremssystems als sicherheitsrelevantem Bremssystem fortgeführt wird, nachdem die Gesamtbremskraft des Fahrzeuges als zu hoch beurteilt wurde. Durch geschwindigkeits- oder lastabhängige Druckregelung der pneumatischen Bremse kann während der Schnellbremsung mit der pneumatischen Bremse eine maximale Verzögerung erzielt werden.

In einer vorteilhaften Ausgestaltung der Erfindung ist das weitere Bremssystem in der Bremsanlage eine elektrodynamische Bremse (ED), eine Magnetschienenbremse (MG) oder eine Eddy Current Brake (ECB). Bei diesen hydraulischen Fahrzeugen kann auch eine hydraulische Bremse, beispielsweise ein Retarder, verwendet werden.

In einer weiteren vorteilhaften Ausgestaltung des erfindungsgemäßen Verfahrens wird eine Regelung der Bremskraft der an Schnellbremsung beteiligten Bremssysteme vorgenommen. Dadurch kann die Bremskraft zwischen den einzelnen Bremssystemen aufgeteilt werden. Vorzugsweise werden dabei verschleißende Bremssysteme, beispielsweise die pneumatische Bremse, mit einem möglichst niedrigen Bremsmoment beaufschlagt, während verschleißfreie Bremsen, wie beispielsweise die elektrodynamische Bremse, ein maximal mögliches Bremsmoment bereitstellen.

Eine erfindungsgemäße Vorrichtung zur Steuerung oder Regelung einer Bremsanlage, insbesondere einer Bremsanlage eines Schienenfahrzeuges, weist wenigstens ein sicherheitsrelevantes Bremssystem und wenigstens ein weiteres Bremssystem auf. Sie weist des Weiteren einen Signaleingang zum Einlesen einer Schnellbremsanforderung auf. Sie weist ferner eine Einrichtung zum Durchführen einer Schnellbremsung unter Verwendung mehrerer Bremssysteme auf. Die Vorrichtung weist des Weiteren eine Einrichtung zum Überwachen der Gesamtbremskraft des Schienenfahrzeuges und eine Einrichtung zum Überprüfen der Gesamtbremskraft auf das Überschreiten eines oder mehrerer Schwellwerte auf. Des Weiteren weist die Vorrichtung eine Einrichtung zum Durchführen der Schnellbremsung unter ausschließlicher Verwendung des sicherheitsrelevanten Bremssystems auf.

Die Signaleinrichtung liest ein Signal ein, durch das von außen eine Schnellbremsanforderung vorgegeben wird. Die Schnellbremsanforderung kann von dem Fahrzeugführer, aber auch vom Fahrzeug selber kommen, beispielsweise durch die Indusi bei Einleitung einer Zwangsbremsung.

Die Einrichtung zum Durchführen einer Schnellbremsung unter Verwendung mehrerer Bremssysteme steuert aufgrund der Schnellbremsanforderung die vorhandenen Bremssysteme an. Dabei wird die Bremskraft auf die verschiedenen vorhandenen Systeme verteilt. Vorzugsweise wird die Bremskraft dabei so verteilt, dass das Bremsmoment so weit wie möglich durch verschleißfreie Bremsen, beispielsweise eine elektrodynamische Bremse, aufgebracht wird, während Reibungsbremsen, insbesondere die pneumatische Bremse, nach Möglichkeit nicht angesteuert werden oder nur ein geringes Bremsmoment aufbringen. Dies hängt auch vom jeweiligen Fahrzeugzustand ab, da elektrodynamische Bremsen bei geringeren Geschwindigkeiten ein geringeres Bremsmoment aufbringen, so dass das mit abnehmender Geschwindigkeit fallende Bremsmoment durch Erhöhen des Bremsmoments durch die pneumatische Bremse kompensiert werden muss.

Die Einrichtung zum Überwachen der Gesamtbremskraft des Fahrzeuges überwacht den Fahrzeugzustand, insbesondere die Verzögerung des Fahrzeuges, und bestimmt aus dieser die Bremskraft. Dies kann durch Sensoren und Fahrzeugmodelle erfolgen.

In einer weiteren Einrichtung der Vorrichtung wird überprüft, ob die derart bestimmte Gesamtbremskraft einen oder verschiedene Schwellwerte überschreitet. Überschreitet sie einen oder verschiedene Schwellwerte, so wird dieses an eine Einrichtung zum Durchführen der Schnellbremsung unter ausschließlicher Verwendung des sicherheitsrelevanten Bremssystems gemeldet. Diese Einrichtung deaktiviert die weiteren Bremssysteme und führt die Sicherheitsbremsung ausschließlich unter Verwendung des sicherheitsrelevanten Bremssystems durch.

Eine im Sinne der Erfindung ausgebildete Vorrichtung zur Steuerung oder Regelung einer Bremsanlage zeichnet sich vor allem dadurch aus, dass der Verschleiß der Reibungsbremsen des Fahrzeuges soweit wie möglich reduziert wird, und gleichzeitig eine Bremsenergie-Rückgewinnung möglich wird.

In einer weiteren Ausgestaltung der erfindungsgemäßen Vorrichtung weist die Einrichtung zum Überwachen der Gesamtbremskraft des Fahrzeuges einen Beschleunigungssensor auf. Durch diesen kann die Verzögerung des Fahrzeuges bestimmt werden. Die Verzögerung kann dabei insbesondere in Fahrtrichtung erfolgen, so dass auch bei Steigungs- oder Gefällefahrten stets die Gesamtbremskraft richtig ermittelt wird. Zur Ermittlung der Gesamtbremskraft können Modelle des Fahrzeuges herangezogen werden.

In einer weiteren vorteilhaften Ausgestaltung der Vorrichtung ist das sicherheitsrelevante Bremssystem eine pneumatische Bremse.

In einer weiteren vorteilhaften Ausgestaltung der Vorrichtung ist das weitere Bremssystem eine elektrodynamische Bremse, eine Magnetschienenbremse oder eine Eddy Current Brake (ECB). Bei diesen hydraulischen Fahrzeugen kann auch eine hydraulische Bremse, beispielsweise ein Retarder, verwendet werden. Es können eines oder mehrere weitere Bremssysteme in der Vorrichtung eingesetzt werden.

In einer weiteren vorteilhaften Ausgestaltung der Vorrichtung weist die Vorrichtung eine Einrichtung zum Verteilen der Bremskraft zwischen den an der Schnellbremsung beteiligten Bremssystemen auf. Dadurch kann das zum Durchführen der Schnellbremsung erforderliche Bremsmoment durch die verschiedenen Systeme erzeugt werden. Das Bremsmoment kann nach verschiedenen Optimalitätskriterien, beispielsweise Verschleiß, Bremsenergie-Rückgewinnung oder erforderlichem Bremsmoment, verteilt werden.

In einer erfindungsgemäßen Bremsanlage wird eine Vorrichtung zur Steuerung oder Regelung einer Bremsanlage gemäß den vorstehend beschriebenen Ausgestaltungen eingesetzt.

In einem erfindungsgemäßen Schienenfahrzeug wird eine Vorrichtung zur Steuerung oder Regelung einer Bremsanlage gemäß den vorstehend beschriebenen Ausgestaltungen eingesetzt.

Ausführungsbeispiele der Erfindung werden nachfolgend anhand der beigefügen Zeichnungen beschrieben.

Es zeigen:
- Fig. 1:
- den Ablauf eines erfindungsgemäßen Verfahrens zur Steuerung oder Regelung einer Bremsanlage; und
- Fig. 2:
- eine Vorrichtung zur Steuerung oder Regelung einer Bremsanlage.

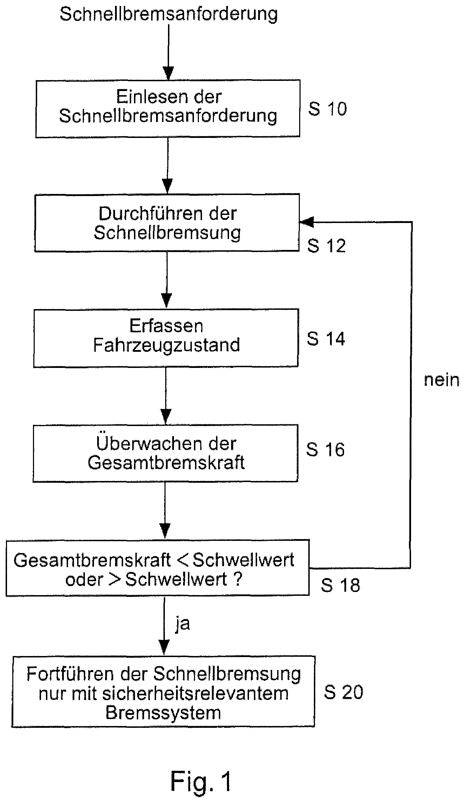

Fig. 1 zeigt ein Ablaufdiagramm eines erfindungsgemäßen Verfahrens zur Steuerung oder Regelung einer Bremsanlage zum Durchführen einer Schnellbremsung.

Das Verfahren zur Steuerung oder Regelung einer Bremsanlage erhält von außen, beispielsweise vom Triebfahrzeugführer oder von den Fahrzeugsystemen oder den Zugsicherungssystemen, wie beispielsweise durch die Sicherheitsfahrschaltung oder die Indusi, eine Schnellbremsanforderung vorgegeben. Diese wird zunächst im ersten Verfahrensschritt erfasst (S10). Daraufhin wird unmittelbar eine Schnellbremsung eingeleitet (S12). Dabei werden neben dem sicherheitsrelevanten Bremssystem, üblicherweise dem pneumatischen Bremssystem, eines oder mehrere weitere Bremssysteme, die während der Betriebsbremsung verwendet werden, eingesetzt. Die weiteren Bremssysteme sind so ausgelegt, dass sie niedrigere Sicherheitsanforderungen erfüllen als das sicherheitsrelevante Bremssystem. Diese Bremssysteme werden angesteuert, und es wird für die verschiedenen Bremssysteme das durch das Bremssystem jeweils aufzubringende Bremsmoment vorgegeben. Dabei kann das weitere Bremssystem bzw. die weiteren Bremssysteme zunächst überwiegend oder ausschließlich eingesetzt werden, oder es wird bzw. sie werden zusätzlich und unterstützend zum sicherheitsrelevanten Bremssystem eingesetzt. Das Fahrzeug führt dann eine Schnellbremsung durch.

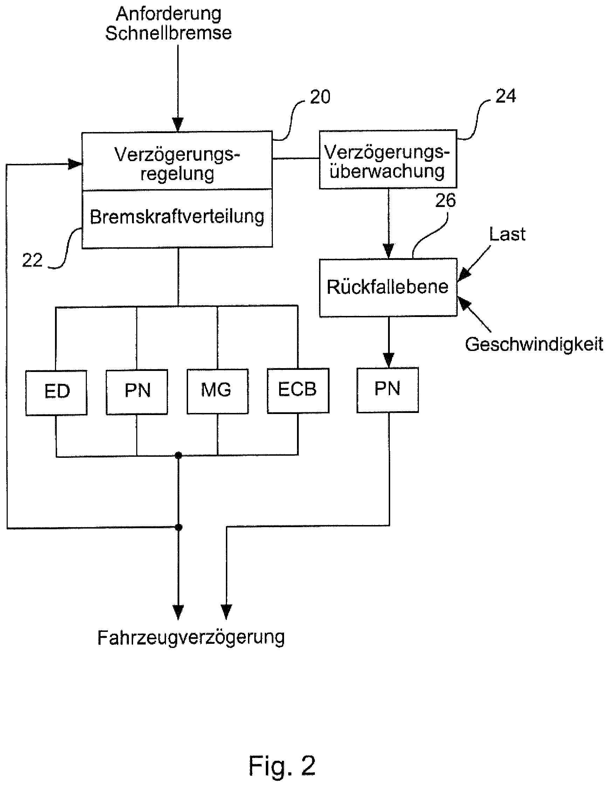

Wenn das sicherheitsrelevante Bremssystem eine pneumatische Bremse ist, wird eine Druckregetung der pneumatischen Bremse durchgeführt, um die Bremskraft zu verteilen und soweit wie möglich mit dem weiteren Bremssystem bzw. den weiteren Bremssystemen, insbesondere mit einem verschleißfreien weiteren Bremssystem, zu bremsen. Da beispielsweise die in Fig. 2 vorhandene elektrodynamische Bremse ED nicht bis zu einem Stillstand des Fahrzeuges herunterbremst und ihr Bremsmoment mit abnehmender Geschwindigkeit sinkt, kann es erforderlich sein, die Bremsmomente der verschiedenen Bremssysteme beispielsweise in Abhängigkeit von Geschwindigkeit und Lasten zu steuern und damit eine geeignete Bremskraftverteilung herbeizuführen, um jederzeit eine optimale Gesamtbremskraft zu erzielen.

Während der Schnellbremsung wird der Fahrzeugzustand erfasst (S14). Dafür wird beispielsweise mittels eines Beschleunigungssensors die Fahrzeugverzögerung ermittelt. Aus der Fahrzeugverzögerung wird die Gesamtbremskraft des Fahrzeuges ermittelt. Das Überwachen der Gesamtbremskraft des Fahrzeuges kann insbesondere durch Messen der Gesamtverzögerung in Fahrzeugrichtung erfolgen. Aus der Verzögerung des Fahrzeuges, die einfach mit der vorhandenen Sensorik des Fahrzeugs ermittelt werden kann, kann somit auf die Gesamtbremskraft zurückgeschlossen werden. Dabei wird die Gesamtverzögerung insbesondere in Fahrtrichtung durch einen meist serienmäßig im Fahrzeug vorhandenen Beschleunigungssensor gemessen.

Die ermittelte Gesamtbremskraft wird im nachfolgenden Schritt (S16) überwacht. Es wird überprüft, ob die ermittelte Gesamtbremskraft einen vorgegebenen Schwellwert überschreitet (S18). Dieser Schwellwert kann festgelegt sein, und es kann sich um voneinander verschiedene Schwellwerte handeln. Der oder die Schwellwerte können jedoch auch vom Fahrzeugzustand, beispielsweise der Fahrzeuggeschwindigkeit oder dem Fahrzeuggewicht abhängig sein. Ist die Gesamtbremskraft nicht größer als der oder die vorgegebenen Schwellwerte, so wird die Schnellbremsung weiterhin unter Verwendung der mehreren Bremssysteme durchgeführt (S12).

Ist die Gesamtbremskraft hingegen unzureichend, d.h. unterschreitet die Gesamtbremskraft einen Schwellwert (was nicht zur erfindungsgemäßen Lehre zählt), da die Fahrzeugverzögerung nicht ausreichend ist, so wird die Schnellbremsung ausschließlich mit dem sicherheitsrelevanten Bremssystem durchgeführt (S20). Dies ist auch der Fall, wenn die Gesamtbremskraft zu hoch ist. Die weiteren Bremssysteme werden dafür abgeschaltet, und das Bremsmoment wird nur durch das sicherheitsrelevante Bremssystem bereitgestellt. Durch das Steuerung- oder Regelungsverfahren wird dabei das durch das sicherheitsrelevante Bremssystem bereitgestellte Bremsmoment so angepasst, dass eine maximale bzw. eine für die Schnellbremsung geforderte Verzögerung des Fahrzeugs erreicht wird.

Fig. 2 zeigt den schematischen Systemaufbau einer Vorrichtung zur Steuerung oder Regelung einer Bremsanlage zur Durchführung einer Schnellbremsung unter Verwendung mehrerer Bremssysteme.

Die Steuerungs- oder Regelungsvorrichtung weist einen Signaleingang zum Einlesen einer Schnellbremsanforderung auf. Eine Verzögerungsregelung 20 und eine Bremskraftverteilung 22 wirken zusammen, um die verschiedenen in Fig. 2 dargestellten Bremssysteme (pneumatische Bremse PN, elektrodynamische Bremse ED, Magnetschienenbremse EG, Eddy Current Brake ECB) anzusteuern. Dabei weist die Bremsanlage des Schienenfahrzeugs entweder alle der in Fig. 2 dargestellten Bremssysteme, oder einen Teil dieser Bremssysteme auf. In nahezu allen Schienenfahrzeugen sind Druckluftbremsen, auch als pneumatische Bremsen (PN) bezeichnet, im Einsatz. Daneben weisen Schienenfahrzeuge, insbesondere Triebfahrzeuge, auch Magnetschienenbremsen (MG) und bei elektrischen und dieselelektrischen Fahrzeugen elektrodynamische Bremsen (ED) bzw. bei dieselhydraulischen Fahrzeugen hydraulische bzw. Retarderbremsen auf. Neuere Fahrzeuge, insbesondere Triebfahrzeuge des Hochgeschwindigkeitsverkehrs, werden auch mit sogenannten Eddy Current Brakes (ECB) ausgerüstet.

In der in Fig. 2 dargestellten Vorrichtung ist das sicherheitsrelevante Bremssystem eine pneumatische Bremse (PN). Pneumatische Bremsen sind in Schienenfahrzeugen in der Regel vorhanden. Sie sind einfach aufgebaut und erfüllen die entsprechenden Anforderungen hinsichtlich der Sicherheitsbewertung. Insbesondere kann mit pneumatischen Bremsen eine Verzögerung des Fahrzeugs bis zum Stillstand erreicht werden. Bei der Durchführung der Schnellbremsung kann der Druck der pneumatischen Bremse (PN) anhand der Geschwindigkeit, der Last, oder beider Größen gesteuert oder geregelt werden. Diese Drucksteuerung bzw.-regelung ist einerseits dann möglich, wenn die pneumatische Bremse lediglich mit den anderen Bremssystemen zusammenwirkt, um die Schnellbremsung durchzuführen, aber insbesondere auch dann, wenn die Schnellbremsung unter ausschließlicher Verwendung des pneumatischen Bremssystems als sicherheitsrelevantem Bremssystem fortgeführt wird, nachdem die Gesamtbremskraft des Fahrzeuges als zu hoch beurteilt wurde. Durch geschwindigkeits- oder lastabhängige Druckregelung der pneumatischen Bremse kann während der Schnellbremsung mit der pneumatischen Bremse eine maximale Verzögerung erzielt werden.

Die Bremskraftverteilung 22 gibt dabei vor, welcher Anteil des Bremsmomentes durch das jeweilige Bremssystem beizusteuern ist. Dafür kann in der Ausführung gemäß Fig. 2 beispielsweise eine Regelung der Bremskräfte der an Schnellbremsung beteiligten Bremssysteme vorgenommen werden. Dadurch kann die Gesamtbremskraft zwischen den einzelnen Bremssystemen aufgeteilt werden. Dabei werden insbesondere verschleißende Bremssysteme, beispielsweise die pneumatische Bremse (PN), mit einem möglichst niedrigen Bremsmoment beaufschlagt, während verschleißfreie Bremsen, wie beispielsweise die elektrodynamische Bremse (ED), ein maximal mögliches Bremsmoment bereitstellen. Die Verzögerungsregelung 20 gibt dabei zunächst die geforderte Verzögerung des Systems und damit die geforderte Gesamtbremskraft vor, die dann durch die Bremskraftverteilung 22 in Bremsmomentanforderungen für die einzelnen Systeme umgesetzt wird.

Aufgrund der einzelnen Bremsmomente durch die einzelnen Bremssysteme verzögert das Fahrzeug. Die Verzögerung des Fahrzeugs wird gemessen und in der Verzögerungsregelung 20 beobachtet. Durch die Verzögerungsüberwachung 24 wird überprüft, ob die erzielte Verzögerung ausreichend hoch ist, um die Anforderungen an die Schnellbremsung zu erfüllen, oder ob die erzielte Verzögerung zu niedrig oder zu hoch ist. Ist letzteres der Fall, so wird eine Rückfallebene 26 aktiviert, durch die die weiteren Bremssysteme deaktiviert werden und die Bremsung ausschließlich durch die pneumatische Bremse PN durchgeführt wird. Die Ansteuerung der pneumatischen Bremse erfolgt in der Rückfallebene 26 dabei in der in Fig. 2 dargestellten Vorrichtung abhängig von der momentanen Last und der momentanen Geschwindigkeit des Fahrzeugs.

### BEZUGSZEICHENLISTE

- S10
- Einlesen der Schnellbremsanforderung
- S12
- Durchführen der Schnellbremsung
- S14
- Erfassen des Fahrzeugzustands
- S16
- Überwachen der Gesamtbremskraft
- S18
- Überprüfen der Gesamtbremskraft auf Schwellwert überschreitung
- S20
- Fortführen der Schnellbremsung nur mit sicherheitsrelevantem Bremssystem

- 20
- Verzögerungsregelung
- 22
- Bremskraftverteilung
- 24
- Verzögerungsüberwachung
- 26
- Rückfallebene

## Patentansprüche

1. Verfahren zur Steuerung oder Regelung einer Bremsanlage, insbesondere einer Bremsanlage eines Schienenfahrzeugs, wobei die Bremsanlage wenigstens ein sicherheitsrelevantes Bremssystem (PN) und wenigstens ein weiteres Bremssystem (ED, MG, ECB) aufweist,
mit folgenden Schritten:
Einlesen einer Schnellbremsanforderung (S10),
Durchführen einer Schnellbremsung unter Verwendung wenigstens eines der weiteren Bremssysteme (S20),
**gekennzeichnet durch** die folgenden Schritte:
Überwachen der Gesamtbremskraft des Fahrzeugs (S16),
Überprüfen, ob die Gesamtbremskraft einen Schwellwert überschreitet (S18),
bei Überschreiten des Schwellwerts Fortführen der Schnellbremsung unter ausschließlicher Verwendung des sicherheitsrelevanten Bremssystems (S20).

2. Verfahren nach Anspruch 1,
wobei das Überwachen der Gesamtbremskraft des Fahrzeugs (S16) durch Messen einer Gesamtverzögerung in Fahrtrichtung erfolgt.

3. Verfahren nach Anspruch 2,
wobei das Messen der Gesamtverzögerung in Fahrtrichtung durch einen Beschleunigungssensor erfolgt.

4. Verfahren nach einem der vorangehenden Ansprüche,
wobei das sicherheitsrelevante Bremssystem eine pneumatische Bremse (PN) ist.

5. Verfahren nach Anspruch 4,
wobei der Druck der pneumatischen Bremse (PN) anhand der Geschwindigkeit und/oder der Last gesteuert oder geregelt wird.

6. Verfahren nach einem der vorangehenden Ansprüche,
wobei das weitere Bremssystem eine elektrodynamische Bremse (ED), eine Magnetschienenbremse (MG) oder eine Eddy Current Brake (ECB) ist.

7. Verfahren nach einem der vorangehenden Ansprüche,
wobei eine Regelung der Bremskraft der an der Schnellbremsung beteiligten Bremssysteme (PN, ED, MG, ECB) vorgenommen wird.

8. Vorrichtung zur Steuerung oder Regelung einer Bremsanlage, insbesondere einer Bremsanlage eines Schienenfahrzeugs, wobei die Bremsanlage wenigstens ein sicherheitsrelevantes Bremssystem (PN) und wenigstens ein weiteres Bremssystem (ED, MG, ECB) aufweist,
wobei die Vorrichtung aufweist:
einen Signaleingang zum Einlesen einer Schnellbremsanforderung,
eine Einrichtung (20, 22) zum Durchführen einer Schnellbremsung unter Verwendung mehrerer Bremssysteme (ED, MG, ECB, PN),
**dadurch gekennzeichnet, dass** die Vorrichtung aufweist:
eine Einrichtung (24) zum Überwachen der Gesamtbremskraft des Fahrzeugs,
eine Einrichtung (24) zum Überprüfen der Gesamtbremskraft auf das Überschreiten eines Schwellwerts, und
eine Einrichtung (26) zum Durchführen der Schnellbremsung unter ausschließlicher Verwendung des sicherheitsrelevanten Bremssystems (PN).

9. Vorrichtung nach Anspruch 8,
wobei die Einrichtung (24) zum Überwachen der Gesamtbremskraft des Fahrzeugs ausgestaltet ist zum Messen einer Fahrzeugverzögerung des Fahrzeugs in Fahrtrichtung und die Einrichtung (24) zum Überwachen der Gesamtbremskraft des Fahrzeugs einen Beschleunigungssensor aufweist.

10. Vorrichtung nach Anspruch 8 oder 9,
wobei das sicherheitsrelevante Bremssystem eine pneumatische Bremse (PN) ist.

11. Vorrichtung nach einem der Ansprüche 8 bis 10,
wobei das weitere Bremssystem eine elektrodynamische Bremse (ED), eine Magnetschienenbremse (MG) oder eine Eddy Current Brake (ECB) ist.

12. Vorrichtung nach einem der Ansprüche 8 bis 10,
wobei die Vorrichtung eine Einrichtung (22) zum Verteilen der Bremskraft zwischen den an der Schnellbremsung beteiligten Bremssystemen (ED, MG, ECB, PN) aufweist.

13. Bremsanlage mit einer Steuerungs- oder Regelungsvorrichtung nach einem der Ansprüche 8 bis 12.

14. Schienenfahrzeug mit einer Steuerungs- oder Regelungsvorrichtung nach einem der Ansprüche 8 bis 12 oder einer Bremsanlage nach Anspruch 13.

## Claims

1. Method for controlling or regulating a brake system, in particular a brake system of a rail vehicle, the brake system having at least one safety-relevant brake system (PN) and at least one further brake system (ED, MG, ECB), with the following steps:
inputting of a rapid brake request (S10),
carrying out of a rapid brake operation using at least one of the further brake systems (S20),
**characterized by** the following steps:
monitoring of the overall brake force of the vehicle (S16),
checking whether the overall brake force exceeds a threshold value (S18),
continuation of the rapid brake operation with exclusive use of the safety-relevant brake system (S20) if the threshold value is exceeded.

2. Method according to Claim 1,
the monitoring of the overall brake force of the vehicle (S16) taking place by way of measurement of an overall retardation in the driving direction.

3. Method according to Claim 2,
the measurement of the overall retardation in the driving direction taking place by way of an acceleration sensor.

4. Method according to one of the preceding claims,
the safety-relevant brake system being a pneumatic brake (PN).

5. Method according to Claim 4,
the pressure of the pneumatic brake (PN) being controlled or regulated using the speed and/or the load.

6. Method according to one of the preceding claims,
the further brake system being an electrodynamic brake (ED), an electromagnetic rail brake (MG) or an eddy current brake (ECB).

7. Method according to one of the preceding claims,
a regulation of the brake force of the brake systems (PN, ED, MG, ECB) which participate in the rapid brake operation being performed.

8. Apparatus for controlling or regulating a brake system, in particular a brake system of a rail vehicle, the brake system having at least one safety-relevant brake system (PN) and at least one further brake system (ED, MG, ECB),
the apparatus having:
a signal input for inputting a rapid brake request,
a device (20, 22) for carrying out a rapid brake operation using a plurality of brake systems (ED, MG, ECB, PN),
**characterized in that** the apparatus has:
a device (24) for monitoring the overall brake force of the vehicle,
a device (24) for checking whether the overall brake force exceeds a threshold value, and
a device (26) for carrying out the rapid brake operation with exclusive use of the safety-relevant brake system (PN).

9. Apparatus according to Claim 8,
the device (24) for monitoring the overall brake force of the vehicle being configured to measure a vehicle retardation of the vehicle in the driving direction, and the device (24) for monitoring the overall brake force of the vehicle having an acceleration sensor.

10. Apparatus according to Claim 8 or 9,
the safety-relevant brake system being a pneumatic brake (PN).

11. Apparatus according to one of Claims 8 to 10,
the further brake system being an electrodynamic brake (ED), an electromagnetic rail brake (MG) or an eddy current brake (ECB).

12. Apparatus according to one of Claims 8 to 10,
the apparatus having a device (22) for distributing the brake force between the brake systems (ED, MG, ECB, PN) which participate in the rapid brake operation.

13. Brake system having a control or regulation apparatus according to one of Claims 8 to 12.

14. Rail vehicle having a control or regulation apparatus according to one of Claims 8 to 12 or a brake system according to Claim 13.

## Revendications

1. Procédé de commande ou de régulation d'une installation de frein, notamment d'une installation de frein d'un véhicule ferroviaire, l'installation de frein ayant au moins un système (PN) de frein pertinent du point de vue de la sécurité et au moins un autre système (ED, MG, ECB) de frein,
comprenant les stades suivants :
on lit une demande (S10) de frein rapide,
on effectue un freinage rapide en utilisant au moins l'un des autres systèmes (S20) de frein,
**caractérisé par** les stades suivants :
on surveille la force de frein d'ensemble du véhicule (S16),
on contrôle si la force de frein d'ensemble dépasse une valeur de seuil (S18),
si la valeur de seuil est dépassée, on continue à effectuer le freinage rapide en utilisant exclusivement le système (S20) de frein pertinent du point de vue de la sécurité.

2. Procédé suivant la revendication 1,
dans lequel la surveillance de la force de frein d'ensemble du véhicule (S16) a lieu par mesure d'une décélération d'ensemble dans le sens de la marche.

3. Procédé suivant la revendication 2,
dans lequel la mesure de la décélération d'ensemble dans le sens de la marche s'effectue par un capteur d'accélération.

4. Procédé suivant l'une des revendications précédentes,
dans lequel le système de frein pertinent du point de vue de la sécurité est un frein (PN) pneumatique.

5. Procédé suivant la revendication 4,
dans lequel on commande ou on règle la pression du frein (PN) pneumatique à l'aide de la vitesse et/ou de la charge.

6. Procédé suivant l'une des revendications précédentes,
dans lequel l'autre système de frein est un frein (ED) électrodynamique, un frein (MG) électromagnétique sur rail ou un frein (ECB) à courant de Foucault.

7. Procédé suivant l'une des revendications précédentes,
dans lequel on effectue une régulation de la force de frein des systèmes (PN, ED, MG, ECB) de frein participant au freinage rapide.

8. Dispositif de commande ou de régulation d'une installation de frein, notamment d'une installation de frein d'un véhicule ferroviaire, l'installation de frein ayant au moins un système (PN) de frein pertinent du point de vue de la sécurité et au moins un autre système (ED, MG, ECB) de frein,
dans lequel le dispositif comporte :
une entrée de signal pour lire une demande de frein rapide,
un dispositif (20, 22) pour effectuer un freinage rapide en utilisant plusieurs systèmes (ED, MG, ECB, PN) de frein,
**caractérisé en ce que** le dispositif a :
un dispositif (24) de surveillance de la force de frein d'ensemble du véhicule,
un dispositif (24) de contrôle de la force de frein d'ensemble sur le point de savoir si elle est supérieure à une valeur de seuil, et
un dispositif (26) pour effectuer le freinage rapide en utilisant exclusivement le système (PN) de frein pertinent du point de vue de la sécurité.

9. Dispositif suivant la revendication 8,
dans lequel le dispositif (24) de surveillance de la force de frein d'ensemble du véhicule est conformé pour mesurer une décélération du véhicule dans le sens de la marche et le dispositif (24) de surveillance de la force de frein d'ensemble du véhicule a un capteur d'accélération.

10. Dispositif suivant la revendication 8 ou 9,
dans lequel le système de frein pertinent du point de vue de la sécurité est un frein (PN) pneumatique.

11. Dispositif suivant l'une des revendications 8 à 10,
dans lequel l'autre système de frein est un frein (ED) électrodynamique, un frein (MG) électromagnétique sur rail ou un frein (ECB) à courant de Foucault.

12. Dispositif suivant l'une des revendications 8 à 10,
dans lequel le dispositif a un dispositif (22) de répartition de la force de frein entre les systèmes (ED, MG, ECB, PN) de frein participant au freinage rapide.

13. Installation de frein ayant un dispositif de commande ou de régulation suivant l'une des revendications 8 à 12.

14. Véhicule ferroviaire ayant un dispositif de commande ou de régulation suivant l'une des revendications 8 à 12 ou une installation de frein suivant la revendication 13.
